# EUROPÄISCHE PATENTANMELDUNG

(11) **EP 2 119 347 A2**
(43) Veröffentlichungstag der Anmeldung: **18.11.2009**
(21) Anmeldenummer: 09160298.7
(22) Anmeldetag: 14.05.2009
(51) Int. Cl.: A01K 27/00

(54) **Verfahren zur Herstellung eines Accessoireteils**

(30) Priorität: 15.05.2008 DE 102008023778
(71) Anmelder: RTNTRD GbR, 33818 Leopoldshöhe (DE)
(72) Erfinder: Trautwein, Rolf, 33813, Oerlinghausen (DE); Trautwein, Nadine, 33813, Oerlinghausen (DE)
(74) Vertreter: Kayser, Martin

(57) **Zusammenfassung**

Die vorliegende Erfindung betrifft ein Accessoireteil (20) für Mensch oder Tier mit einer Außenlage (24), die auf ein Trägerelement (28) aufgebracht ist. Zwischen dem Trägerelement (28) und der Außenlage (24) ist mindestens ein Element (22) eingebracht, das gegenüber der Grundfläche des Accessoireteils (20) erhaben vorsteht, wobei eine Rückseite (30) des Trägerelements als im Wesentlichen durchgängige Fläche ausgeführt ist (Fig. 1). Weiterhin betrifft die Erfindung ein Verfahren zur Herstellung eines solchen Accessoireteils (20)

## Beschreibung

Die vorliegende Erfindung betrifft ein Accessoireteil für Mensch oder Tier, das eine Außenlage aufweist, die auf ein Trägerelement aufgebracht ist, sowie ein Verfahren zur Herstellung des Accessoireteils.

Unter dem Begriff Accessoireteil werden im Sinne dieser Erfindung insbesondere schmale, längliche Produkte wie Gürtel, Riemen oder Halsbänder verstanden. Insbesondere betrifft die Erfindung auch Produkte für Tiere, wie beispielsweise Hundeleinen, Hundehalsbänder, Halfter für Pferde und ähnliches.

Die beschriebenen Accessoireteile sind seit langem bekannt und werden in verschiedensten Ausführungen hergestellt und vertrieben. Neben qualitativen Anforderungen spielen auch optische Qualitäten eine wesentliche Rolle für eine erfolgreiche Vermarktung. Beispielsweise werden Gürtel oder Hundehalsbänder aus diesem Grunde mit verschiedensten Zubehörelementen wie Strasssteinen, farbigen Nähten oder ähnlichem versehen. Diese werden üblicherweise auf die sichtbare Außenlage oder Außenseite des Accessoireteils aufgebracht. Das Aufbringen zusätzlicher Elemente hat den Nachteil, dass sich diese während des Gebrauchs lösen können, was das Accessoireteil optisch stark beeinträchtigt.

Bekannt sind weiterhin Accessoireteile, bei denen erhabene Elemente dadurch erzeugt werden, dass die Accessoireteile von ihrer Rückseite mit entsprechenden Stempeln eingedrückt werden, deren Form den Elementen entspricht. Die Elemente stehen dann nach diesem Prägeprozess auf der anderen Seite des Accessoireteils gegenüber einer Grundfläche der Außenlage vor, und können sich nicht lösen, was sicherlich vorteilhaft ist. Nachteilig ist jedoch, dass die Elemente während des Gebrauchs eingedrückt oder sogar vollständig zurück gedrückt werden können, was ebenfalls eine optische Beeinträchtigung bedeutet. Hinzu kommt, dass das Accessoireteil selbst durch den Prägeprozess beeinträchtigt wird, das Material wird im Bereich der hinaus gedrückten Elemente gestreckt und somit in der Stabilität beeinträchtigt. Die durch das Herausdrücken der Elemente entstehenden Vertiefungen auf der Rückseite des Accessoireteils haben auch den Nachteil, dass sich in ihnen oftmals Schweiß oder Verunreinigungen sammeln. Die Reinigung derartiger Accessoireteile ist schwierig und aufwändig.

Die Aufgabe der Erfindung besteht darin, ein Accessoireteil bereitzustellen dass die o. g. Nachteile nicht aufweist. Es soll auch nach längerem Gebrauch optisch ansprechend aussehen und eine hohe Stabilität aufweisen. Weiterhin ist es Aufgabe der Erfindung, ein Verfahren zur Herstellung eines solchen Accessoireteils bereit zu stellen.

Erfindungsgemäß wird die Aufgabe durch ein Accessoireteil für Mensch oder Tier mit einer Außenlage, die auf ein Trägerelement aufgebracht ist, gelöst, bei dem zwischen dem Trägerelement und der Außenlage mindestens ein Element eingebracht ist, das gegenüber einer Grundfläche des Accessoireteils erhaben vorsteht, wobei eine Rückseite des Trägerelements als im Wesentlichen durchgängige Fläche ausgeführt ist.

Weiterhin wird die Aufgabe durch ein Verfahren zur Herstellung des Accessoireteils gelöst, das gekennzeichnet ist durch die Verfahrensschritte:
- Auflegen mindestens eines Elements auf eine Auflagefläche eines Trägerelements,
- Auflegen einer Außenlage auf das Element und die Auflagefläche und
- Verkleben einer Innenseite der Außenlage mit der Auflagefläche bei gleichzeitiger Umhüllung des Elementes.

Die Formulierung "Umhüllung des Elementes" meint, dass die Außenlage derart an dem Element anliegt, dass dieses in ihrer Form und Größe auch nach Aufbringen der Außenlage deutlich erkennbar ist. Das Accessoireteil weist also mindestens ein gegenüber der Grundfläche des Accessoireteils erhabenes Element auf, das optisch den bekannten, durch rückseitige Prägung des Trägerelementes erzeugten erhabenen Elementen ähnlich ist. Der wesentliche Vorteil besteht dagegen aber darin, dass das Element nicht nur nahezu unlösbar mit dem Trägerelement verbunden ist, sondern auch nicht eingedrückt oder sogar zurück gedrückt werden kann. Durch die vollständige Anordnung des Elementes zwischen dem Trägerelement und der Außenlage bleibt die Rückseite des Trägerelementes unverändert, die sonst nachteilige Vertiefung wird vermieden. Bei einem Hundehalsband erhöht sich dadurch beispielsweise auch der Tragekomfort.

In einer besonders einfachen Ausführungsvariante wird die Innenseite der Außenlage mit Klebstoff versehen das Element auf eine Auflagefläche des Trägerelementes aufgelegt und anschließend auf das Trägerelement aufgeklebt. Dabei kann sowohl eine Verklebung ausschließlich mit der Auflagefläche als auch mit der Auflagefläche und der Außenfläche des Elementes erfolgen. Wird lediglich eine Verklebung der Außenlage mit der Auflagefläche des Trägerelementes angestrebt, wird vorteilhafter Weise die Auflagefläche des Trägerelementes mit Klebstoff versehen, die Innenseite der Außenlage bleibt dagegen klebstofffrei. Hierdurch wird gewährleistet, dass kein Klebstoff zwischen das Element und die Innenseite der Außenlage gelangen kann. Auch können die Elemente selbst auf die Auflagefläche des Trägerelementes geklebt werden, um sie für die folgenden Verfahrensschritte zu fixieren.

Je nach Material kann es vorteilhaft sein, zwischen die Außenlage und das Trägerelement mit dem darauf liegenden Element eine Zwischenlage einzubringen. Diese Zwischenlage kann erfindungsgemäß auch eine Struktur aufweisen, die durch die Außenlage hindurch erkennbar ist. Hierdurch lassen sich optisch sehr ansprechende Effekte erzielen. Die Zwischenlage kann auch in erster Linie der Verstärkung des Accessoireteils dienen. Alternativ oder zusätzlich ist auch eine Zwischenlage zwischen Trägerelement und dem Element möglich. In einer besonders vorteilhaften Ausführungsvariante trägt die Zwischenlage beidseitig den Klebstoff, so dass weder die Außenlage noch das Trägerelement vor dem Zusammenfügen mit Klebstoff versehen werden muss.

Vorteilhaft ist auch ein Klebstoff, der seine Klebkraft erst bei Druck oder bei Wärmezufuhr entwickelt. Dies vereinfacht den Herstellungsprozess zusätzlich. Das erfindungsgemäße Verfahren eignet sich insbesondere für eine Kombination mit einem Buggen der Außenlage. Mit Buggen wird das Umlegen der Außenlage um die Kanten des Trägerelementes und das anschließende Befestigen, beispielsweise Verkleben, auf der Rückseite des Trägerelementes beschrieben. Das Trägerelement wird also von der Außenlage zumindest bereichsweise derart eingeschlossen, dass keine offenen Kanten sichtbar sind. In diesem Fall übersteigen die Abmessungen der Außenlage die Abmessungen des Trägerelementes. Dieses Verfahren eignet sich insbesondere auch für unsymetrische und/oder runde Formen des Trägerelementes. Die Außenlage ist in einem solchen Fall entsprechend ausgeformt und eingeschnitten.

Die Erfindung bezieht sich auf sämtliche geeigneten Materialien, insbesondere wird ein optisch sehr ansprechender Effekt durch die Verwendung von Leder, Textil- oder Synthetikmaterial als Außenlage erreicht. Selbstverständlich ist die Erfindung nicht nur auf ein Element beschränkt, vielmehr wird gerade durch die Anordnung mehrerer Elemente ein optisch ansprechender Eindruck erweckt. Beispielsweise eignet sich die Erfindung für das Aufbringen von Worten oder Wortfolgen, beispielsweise können bekannte Markennamen bzw. Modelabels auf das Accessoireteil aufgebracht werden. Neben Buchstaben bzw. alphanumerischen Zeichen sind aber sämtliche anderen geeigneten Formen, also auch Logos oder Schmuckelemente wie Sterne oder Herzen geeignet.

Erfindungsgemäß wird bei der Verwendung mehrerer Elemente auf einen Trägerelement eine Schablone zur Anordnung der Elemente verwendet. Dies ist beispielsweise bei dem Aufbringen von Worten oder Buchstabenfolgen vorteilhaft, da hierdurch die korrekte Ausrichtung und Anordnung der einzelnen Buchstaben und auch deren Abstand zueinander stets gewährleistet ist.

Das erfindungsgemäße Verfahren wird gerade bei der Verwendung von mehreren Elementen auch dadurch vereinfacht, dass das Aufbringen der Außenlage auf das Trägerelement mit den darauf liegenden Elementen mit Hilfe eines Druckkörpers erfolgt. Vorteilhafterweise sind in dessen dem Trägerelement zugewandter Kontaktfläche die Formen der Elemente eingelassen, die über die aufliegenden Elemente gestülpt werden. Hierdurch wird erreicht, dass die Außenlage unmittelbar und sehr eng mit den Elementen, die sich bei diesem Verfahrenschritt bereits auf dem Trägerelement befinden, in Kontakt gebracht wird. Dies ist vor allem für das seitliche Verkleben der Außenlage mit den Elementen von Vorteil, da ansonsten ein dauerhafter Kontakt zwischen den im Wesentlichen vertikal zur Auflagefläche des Trägerelementes verlaufenden Seitenflächen der Elemente nicht gewährleistet ist. Die in die Kontaktfläche des Druckelementes eingelassenen elementförmigen Vertiefungen weisen dabei eine Tiefe auf, die die Höhe des Elementes auf dem Trägerelement zzgl. der Stärke der Außenlage und ggf. der Zusatzlage unterschreitet. Dies bewirkt, dass die Außenlage fest auf die Elemente aufgedrückt wird, wobei diese evtl. etwas komprimiert.

Die Außenlage kann während des Aufbringens beispielsweise durch ein Vacuum an den Druckkörper angesaugt werden.

Die Elemente können nach Aufbringen auf die Außenlage durch eine zusätzliche Naht betont und/oder stabilisiert werden. Diese Naht verläuft möglichst eng entlang der Außenkontur der Elemente. Weisen die Elemente auch innenliegende Vertiefungen auf, können entsprechende Nähte auch dort vorgesehen sein.

In der nachfolgenden Figurenbeschreibung wird die Erfindung näher erläutert. Das gezeigte Ausführungsbeispiel ist dabei lediglich zur Veranschauung gedacht und soll die Erfindung nicht auf die gezeigten Merkmale begrenzen. Es zeigen:
- Fig. 1: ein Accessoireteil in perspektivischer Ansicht von vorne,
- Fig. 2: die Rückseite des Accessoireteils aus Fig. 1,
- Fig. 3: eine Explosionsdarstellung eines Ausführungsbeispiels eines Acces- soireteils,
- Fig. 4: eine Schablone zum Ausrichten von Elementen,
- Fig. 5: einen Druckkörper zum Aufbringen einer Außenlage.

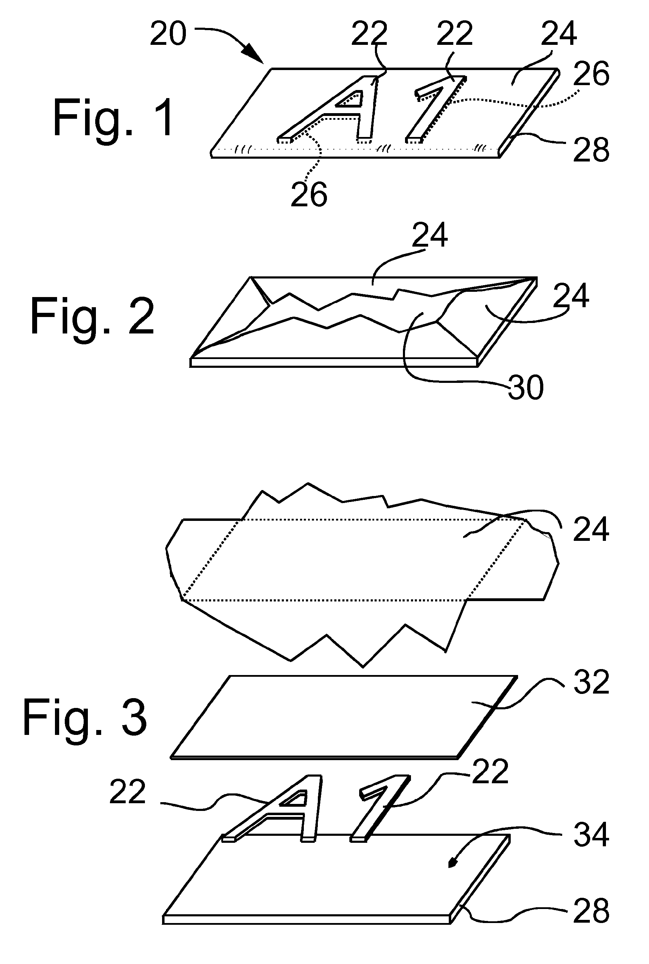

Fig. 1 zeigt einen relevanten Abschnitt eines Accessoireteils 20, beispielsweise einen Abschnitt eines Gürtels oder eines Hundehalsbandes. Erkennbar sind Elemente 22, die gegenüber einer Grundfläche des Accessoireteils 20 erhaben vorstehen. Die Elemente 22 sind von einer Naht 26 umgeben, sie grenzt unmittelbar an die Elemente 22 an. Diese Naht 26 hat den Vorteil, dass die Außenlage 24 eng an die Elemente 22 herangezogen wird und diese straff umhüllt und dass die Außenlage (24) zusätzlich mit dem Trägerelement (28) vernäht ist. Die Außenlage 24 ist um ein Trägerelement 28 herumgeschlagen, so dass keine offenen Kanten sichtbar sind.

Fig. 2 zeigt eine Rückseite 30 des Accessoireteils 20. Erkennbar ist derjenige bereich der Außenlage 24, der mit der Rückseite 30 verklebt ist. Durch die gezackte Darstellung der Ränder der Außenlage 24 soll verdeutlicht werden, dass diese je nach geometrischer Form des Trägerelementes 28 derart zugeschnitten ist, dass von vorne oder von der Seite keine offenen Kanten, Nähte oder Schnitte erkennbar sind. Die Rückseite 30 weist eine im Wesentlichen unveränderte, ebene Fläche auf.

Fig. 3 verdeutlicht in einer Explosionsdarstellung beispielhaft den Aufbau des Accessoireteils 20. Auch kann das Verfahren zur Herstellung des Accessoireteils 20 anhand dieser Figur näher erläutert werden.

Wie bereits ausgeführt, weist das Accessoireteil 20 ein Trägerelement 28, Elemente 22 und eine Außenlage 24 auf. Zusätzlich ist in Figur 3 eine Zwischenlage 32 eingezeichnet, die zwischen den Elementen 22 und der Außenlage 24 angeordnet ist.

Die Herstellung des Accessoireteils 20 erfolgt dadurch, dass die Elemente 22 zunächst auf das Trägerelement 28 aufgelegt und ausgerichtet werden. Bedarfsweise können die Elemente 22 mit dem Trägerelement 28 verklebt werden. Die Zwischenlage 32 kann beispielsweise der Verstärkung des Accessoireteils 20 dienen, sie kann aber auch eine durch die Außenlage 24 hindurch erkennbare Struktur aufweisen. Nach dem Auflegen und Ausrichten der Elemente 22 wird entweder die Zwischenlage 32 oder unmittelbar die Außenlage 24 aufgelegt und gebuggt, also um das Trägerelement 28 herumgeschlagen und auf der Rückseite 30 verklebt.

Die Außenlage 24 kann dabei mit einer Auflagefläche 34 des Trägerelementes 28, auf der die Elemente 22 aufliegen, verklebt werden. Wird eine Zwischenlage 32 eingesetzt, kann diese mit der Auflagefläche 34 des Trägerelementes 28 verklebt werden und bedarfsweise eine weitere Verklebung zwischen der Außenlage 24 und der Zwischenlage 32 vorgesehen sein. Denkbar ist auch, dass die Zwischenlage 32 oder die Außenlage 24 auch auf die Elemente 22 geklebt wird. Dies hat den Vorteil, dass die gesamte, der Auflagefläche 34 zugewandte Fläche der Zwischenlage 32 bzw. der Außenlage 24 mit Klebstoff versehen werden kann.

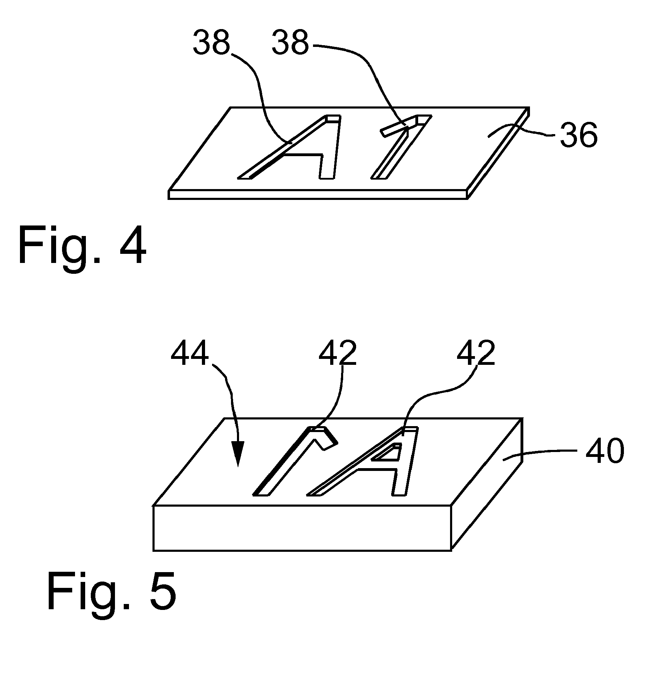

Fig. 4 zeigt als Hilfswerkzeug für das Herstellungsverfahren eine Schablone 36, in die Vertiefungen oder Öffnungen 38 in Form der Elemente 22 eingebracht sind. Diese Schablone 36 wird bei der Herstellung auf das Trägerelement 28 aufgelegt und vorgefertigte Elemente 22 in die Öffnungen 38 eingelegt. Die korrekte Anordnung und Ausrichtung der Elemente 22 ist damit stets gewährleistet, was gerade bei höherem Produktionszahlen vorteilhaft ist, da auch dann eine gleich bleibende Qualität bzgl. der Ausrichtung und Anordnung der Elemente 22 gesichert ist.

Fig. 5 zeigt einen Druckkörper 40 in perspektivischer Ansicht von schräg unten. Erkennbar sind Vertiefungen 42 in einer Druckfläche 44, die die Form der Elemente 22 aufweisen. Bei der Herstellung des Accessoireteils 20 wird dieser Druckkörper 40 auf die bereits auf dem Trägerelement 28 angeordneten Elemente 22 mit darüberliegender Außenlage 24 aufgesetzt und angedrückt. Die Vertiefungen 42 gewährleisten dabei, dass insbesondere die Außenlage 24, ggf. auch die Zwischenlage 32, die Elemente 22 straff und faltenfrei umhüllt. Vorteilhafterweise sind die Elemente 22 aus einem komprimierbaren Material herstellt, so dass die Vertiefungen 22 eine geringere Tiefe aufweisen können, als die Elemente 22 zzgl. der Zwischenlage 32 und ggf. der Auslage 24 hoch sind. Dadurch wird gewährleistet, dass die Außenlage 24 und/oder die Zwischenlage 32 fest mit der Außenfläche der Elemente 22 verbunden wird.

Die Erfindung ist nicht auf die beschriebenen Ausführungsbeispiele beschränkt, sondern umfasst auch weitere, nicht gezeigte Ausführungsvarianten der Erfindung. Beispielsweise bezieht sie sich auch auf Accessoireteile von Möbeln, wie Schlaufen oder Riemen.

## Patentansprüche

1. Accessoireteil (20) für Mensch oder Tier mit einer Außenlage (24), die auf ein Trägerelement (28) aufgebracht ist, **dadurch gekennzeichnet, dass** zwischen dem Trägerelement (28) und der Außenlage (24) mindestens ein Element (22) eingebracht ist, das gegenüber der Grundfläche des Accessoireteils (20) erhaben vorsteht, wobei eine Rückseite (30) des Trägerelements als im Wesentlichen durchgängige Fläche ausgeführt ist.

2. Accessoireteil (20) nach Anspruch 1, **dadurch gekennzeichnet, dass** die Außenlage (24) zumindest bereichsweise um das Trägerelement (28) umgeschlagen und auf der der Rückseite (30) befestigt ist.

3. Accessoireteil (20) nach Anspruch 2, **dadurch gekennzeichnet, dass** die Außenlage (24) auf der der Rückseite (30) verklebt ist.

4. Accessoireteil (20) nach einem der Ansprüche 1 bis 3, **dadurch gekennzeichnet, dass** zwischen dem Trägerelement (28) und der Außenlage (24) eine Zwischenlage (32) angeordnet ist.

5. Accessoireteil (20) nach einem der Ansprüche 1 bis 4, **dadurch gekennzeichnet, dass** das Element (22) von einer Naht (26) umgeben ist, die unmittelbar an das Element (22) angrenzt.

6. Accessoireteil (20) nach einem der Ansprüche 1 bis 5, **dadurch gekennzeichnet, dass** das Element (22) aus einem komprimierten Material bestehen.

7. Verfahren zur Herstellung des Accessoireteils (20), **gekennzeichnet durch** die Verfahrensschritte:
- Auflegen mindestens eines Elements (22) auf eine Auflagefläche eines Trägerelements (28),
- Auflegen einer Außenlage (24) auf das Element (22) und die Auflagefläche und
- Verkleben einer Innenseite der Außenlage (24) mit der Auflagefläche bei gleichzeitiger Umhüllung des Elementes (20).

8. Verfahren nach Anspruch 7, **dadurch gekennzeichnet, dass** das Element (22) mit dem Trägerelement (28) verklebt wird.

9. Verfahren nach Anspruch 7 oder Anspruch 8, **dadurch gekennzeichnet, dass** die Außenlage (24) zumindest bereichsweise um das Trägerelement (28) umgeschlagen und auf der der Rückseite (30) befestigt wird.

10. Accessoireteil (20) nach einem der Ansprüche 7 bis 9, **dadurch gekennzeichnet, dass** zwischen dem Trägerelement (28) und der Außenlage (24) eine Zwischenlage (32) angeordnet wird.

11. Accessoireteil (20) nach einem der Ansprüche 7 bis 10, **dadurch gekennzeichnet, dass** die Außenlage (24) unmittelbar um das Element (22) herum mit dem Trägerelement (28) vernäht wird.

12. Accessoireteil (20) nach einem der Ansprüche 7 bis 11, **dadurch gekennzeichnet, dass** das Element (22) mit Hilfe einer Schablone (36) auf dem Trägerelement (28) positioniert wird.

13. Accessoireteil (20) nach einem der Ansprüche 7 bis 12, **dadurch gekennzeichnet, dass** die Außenlage (24) mit einem Druckkörper (40) auf die bereits auf dem Trägerelement (28) angeordneten Elemente (22) angedrückt wird, wobei Vertiefungen (42) in einer Druckfläche (44) des Druckkörpers (40) gewährleisten, dass die Außenlage (24) die Elemente (22) straff und faltenfrei umhüllt.
